# EUROPEAN PATENT APPLICATION

(11) **EP 4 477 065 A1**
(43) Date of publication of application: **18.12.2024**
(21) Application number: 24179242.3
(22) Date of filing: 31.05.2024
(51) Int. Cl.: A01G 20/47, E01H 1/08

(54) **PORTABLE BLOWER**

(30) Priority: 15.06.2023 IT 202300012366
(71) Applicant: Stiga S.p.A., 31033 Castelfranco Veneto (TV) (IT)
(72) Inventor: PANDIN, Enrico, 31020 Villorba (TV) (IT); TOLOTTO, Daniele, 31040 Chiarano (TV) (IT)
(74) Representative: PGA S.p.A.

(57) **Abstract**

A portable blower (1) comprises: a structure (2), at least partially hollow, defining at least one conduit (3) for the transit of an air flow between a suction zone (4) and a blowing end (5), at which a blowing opening (10) of the portable blower (1) is defined; a flow generator device (6) operatively arranged inside the structure (2) which is switchable between a non-operating condition, in which no air flow is generated along the conduit (3) of the structure (2) and an operating condition, in which an air flow is generated along the conduit (3) of the structure (2) between the suction zone (4) and the blowing opening (10), wherein the flow generator device (6) defines a respective passage channel (7) for the air in transit extending along a longitudinal extension axis (X) of the flow generator device (6), optionally coinciding with a longitudinal axis of the structure (2) and/or of the conduit (3) of the portable blower (1), and is defined between an inlet section and an outlet section, wherein the passage channel (7) has in section orthogonal to the axis (X) and in the advancement direction of the air in transit towards the blowing opening (10) of the portable blower (1) between the inlet section and the outlet section, a passage section for the flow, variable in surface, which is reduced along at least one stretch of the passage channel (7).

## Description

### Technical field

The present invention relates to a portable blower of the type usable in outdoor areas, such as roads, gardens, parks and/or the like, for blowing and pushing leaves, small debris, garbage and the like.

### Prior art

Several portable blowers are known which can be used in outdoor areas, such as roads, gardens, parks and/or the like, for blowing and pushing leaves, more or less small debris, garbage and the like.

Generally, the known portable blowers comprise a casing or hollow main body inside which a conduit is defined for the transit of an air flow between a suction zone and a blowing end. The casing can vary in shape and size depending on the model and type of portable blower considered. However, the casing of portable blowers generally has a substantially tubular structure which can be made in a single piece or defined by two or more portions appropriately connected to each other. The air transit conduit extends along the tubular structure to end with a blowing opening which, during use, is maintained by the user, oriented towards the area of the ground, the soil or the road on which it is desired to act by means of blowing.

In order to be able to generate a blowing air flow along the transit conduit, portable blowers are normally provided with corresponding flow generator devices, for example one or more axial impellers which are driven in rotation by suitable electric or endothermic motors. The flow generator devices usually reside inside the tubular structure or casing of portable blowers, with movable elements active inside the transit conduit.

Normally, at the flow generator devices, the known portable blowers have passage channels or conduits having constant sections or channel or conduit stretches with an increased section with respect to the nominal section of the passage channel.

Although the aforementioned configurations of the passage channels or conduits provided at the flow generator devices of the known portable blowers are amply widespread, the Applicant has found that such configurations are not free from some drawbacks and can be improved under several aspects, mainly in relation to the efficiency and quality of the air flow produced during the operation of the portable blowers.

In particular, the Applicant has found that the shape and configuration of the air passage channels at the flow generator devices of the known blowers are such as to give rise to undesired turbulence and recirculation, whereby the quality of the output and blowing air flow, understood as flow homogeneity and linearity, is compromised, with repercussions also in terms of efficiency and effectiveness of the blowing flow.

### Object of the invention

The main object of the present invention is to resolve one or more of the problems detected in the prior art.

It is an object of the present invention to propose a portable blower of the type usable in outdoor areas, such as roads, gardens, parks and/or the like, for blowing and pushing leaves, small debris, garbage which is capable of producing an efficient blowing air flow.

It is a further object of the present invention to propose a portable blower capable of stabilizing the air flow downstream of the flow generator device.

It is also an object of the present invention to propose a portable blower capable of eliminating or significantly reducing turbulence and recirculation downstream of the flow generator device.

In fact, it is an object of the present invention to propose a portable blower capable of producing a substantially linear and laminar of blowing air in output.

And lastly an object of the present invention is to improve the quality of the blowing air flow produced in output.

These objects and still others, which will appear more fully from the following disclosure, are substantially achieved by a portable blower of the type usable in outdoor areas, such as roads, gardens, parks and/or the like, for blowing and pushing leaves, small debris, garbage and the like in accordance with what is expressed in one or more of the appended claims and/or the following aspects, taken alone or in combination with each other.

### Summary of the invention

The aspects of the invention are disclosed herein.

In a 1st independent aspect of the present invention, a portable blower (1) is provided comprising:
- a structure (2), at least partially hollow, defining at least one conduit (3) for the transit of an air flow between a suction zone (4) and a blowing end (5), at which a blowing opening (10) of the portable blower (1) is defined;
- a flow generator device (6) operatively arranged inside the structure (2) switchable between a non-operating condition, in which no air flow is generated along the conduit (3) of the structure (2) and an operating condition, in which an air flow is generated along the conduit (3) of the structure (2) between the suction zone (4) and the blowing opening (10), in which the flow generator device (6) defines a respective passage channel (7) for the air in transit extending along a longitudinal extension axis (X) of the flow generator device (6), and is defined between an inlet section (S1) and an outlet section (S6), the passage channel (7) having in section orthogonal to the axis (X) and in the advancement direction of the air in transit towards the blowing opening (10) of the portable blower (1) between the inlet section (S1) and the outlet section (S2), a passage section (S2, S3, S4, S5) for the flow, variable in surface, which is reduced along at least one stretch of the passage channel (7).

In particular, the longitudinal extension axis (X) of the flow generator device (6) coincides with a longitudinal axis of the structure (2) and/or of the conduit (3) of the portable blower (1).

In a further aspect according to the preceding aspect, said at least one stretch of the passage channel (7) covers at least 20% of a length of the passage channel (7), in particular at least 30% of the length of the passage channel (7) and even more in particular at least 50% of the length of the passage channel (7). The stretch of the passage channel (7) could substantially cover 100% of the length of the passage channel (7).

In another aspect according to any one of the preceding aspects, said at least one stretch of the passage channel (7) is located in a zone closest to the outlet section.

In a further aspect according to any one of the preceding aspects, the inlet section (S1) has a maximum passage surface for the air flow in the passage channel (7) and/or the outlet section (S6) has a minimum passage surface for the air flow in the passage channel (7).

In a 2nd aspect in accordance with the preceding aspect, the passage channel (7) of the flow generator device (6) has, in section orthogonal to the axis (X) and in the advancement direction of the air in transit towards the blowing opening (10) of the portable blower (1), a passage section for the flow, variable in surface, which is reduced, or at most remains constant, along the passage channel (7)..

In a 3rd aspect in accordance with any one of the preceding aspects, the passage channel (7) of the flow generator device (6) has, in section orthogonal to the axis (X) and in the advancement direction of the air in transit towards the blowing opening (10) of the portable blower (1), a passage section for the flow, variable in surface, which has a continuous reduction of the passage section.

In a 4th aspect in accordance with any one of the preceding aspects, the passage channel (7) of the flow generator device (6) has, in section orthogonal to the axis (X) and in the advancement direction of the air in transit towards the blowing opening (10) of the portable blower (1), a passage section for the flow, variable in surface, which does not have any surface increase.

In a 5th aspect in accordance with any one of the preceding aspects, the passage channel (7) of the flow generator device (6) has at least one stretch with a constant section, in which the passage section remains the same for the entire length of the stretch of channel with a constant section.

In a 6th aspect in accordance with any one of the preceding aspects, in the advancement direction of the air in transit towards the blowing opening (10) of the portable blower (1), each passage section or section of the passage channel (7) of the flow generator device (6) is followed by a passage section or subsequent section having a smaller or equal surface.

In a 7th aspect in accordance with any one of the preceding aspects, in the advancement direction of the air in transit towards the blowing opening (10) of the portable blower (1), each passage section or section of the passage channel (7) of the flow generator device (6) is preceded by a passage section or section having a greater or equal surface.

In an 8th aspect in accordance with any one of the preceding aspects, the reduction of the passage section of the passage channel (7) of the flow generator device (6) in the advancement direction of the air in transit towards the blowing opening (10) of the portable blower (1), has a reduction of the section surface comprised between 80 mm² and 160 mm², optionally comprised between 100 mm² and 140 mm², in particular equal to 120 mm².

In a 9th aspect in accordance with any one of the preceding aspects, the reduction of the passage section of the passage channel (7) of the flow generator device (6) in the advancement direction of the air in transit towards the blowing opening (10) of the portable blower (1), has a reduction of the surface in percentage value comprised between 1% and 3% of the maximum passage section, optionally comprised between 1.5% and 2.5%, of the maximum passage section, in particular comprised between 2% and 2.2% of the maximum passage section.

In a 9th-bis aspect in accordance with any one of the preceding aspects, the reduction of the passage section of the passage channel (7) of the flow generator device (6) in the advancement direction of the air in transit towards the blowing opening (10) of the portable blower (1), has a reduction of the surface with a variable trend along the axis (X). In a 9th-ter aspect in accordance with any one of the preceding aspects, the reduction of the passage section of the passage channel (7) of the flow generator device (6) in the advancement direction of the air in transit towards the blowing opening (10) of the portable blower (1), has a first reduction of the surface in a first initial stretch (T1) which is greater than a second reduction in a second stretch (T2) following the first stretch (T1) and a third reduction greater than said first and said second reduction in a third stretch (T3) downstream of the first stretch (T1) and of the second stretch (T2), the first stretch (T1), the second stretch (T2) and the third stretch (T3) having the same length, for example 20mm.

The first initial stretch (T1), the second stretch (T2) and the third stretch (T3) being consecutive and contiguous.

In a 10th aspect in accordance with any one of the preceding aspects, in the advancement direction of the air in transit towards the blowing opening (10) of the portable blower (1), the shape of the section of the passage channel (7) of the flow generator device (6) varies in shape.

In an 11th aspect in accordance with any one of the preceding aspects, in the advancement direction of the air in transit towards the blowing opening (10) of the portable blower (1), the shape of the section of the passage channel (7) of the flow generator device (6) varies from a substantially annular shape to a substantially circular shape.

In a 12th aspect in accordance with any one of the preceding aspects, in the advancement direction of the air in transit towards the blowing opening (10) of the portable blower (1), the shape of the section of the passage channel (7) of the flow generator device (6) varies according to a series of sections of substantially annular shape to a series of sections of substantially circular shape.

In a 13th aspect in accordance with any one of the preceding aspects, in the advancement direction of the air in transit towards the blowing opening (10) of the portable blower (1), a part of the section of the passage channel (7) of the flow generator device (6) is defined by a plurality of annular shapes aligned along the longitudinal extension axis (X) of the structure (2) and/or the conduit (3) of the portable blower (1), each of the annular shapes of the section of the passage channel (7) being delimited by an outer edge, optionally substantially circumferential, and an inner edge, optionally substantially circumferential.

In a 14th aspect in accordance with the preceding aspect, at least one between the inner edge and the outer edge, of the annular shapes defining a part of the passage channel (7) of the flow generator device (6), has a reduction of at least one dimension orthogonal to the longitudinal extension axis (X) of the flow generator device (6), optionally a reduction of a diameter.

In a 15th aspect in accordance with any one of the preceding aspects, the passage channel (7) of the flow generator device (6) is at least in part defined between an outer cap (6a) and an inner structure (6b) of the flow generator device (6).

In a 16th aspect in accordance with the preceding aspect, the outer cap (6a) of the flow generator device (6) has a main portion (6a'), substantially central, of at least partially frustoconical shape with a reduction of at least one orthogonal dimension with respect to the longitudinal extension axis (X) of the flow generator device (6), optionally one diameter, in the advancement direction of the air in transit towards the blowing opening (10) of the portable blower (1). In a 17th aspect in accordance with the preceding aspect, the outer cap (6a) of the flow generator device (6) has at least one end portion (6a") of substantially cylindrical or frustoconical shape with a reduction of at least one orthogonal dimension with respect to the longitudinal extension axis (X) of the flow generator device (6), optionally a diameter, in the advancement direction of the air in transit towards the blowing opening (10) of the portable blower (1), the end portion (6a") of the outer cap (6a) of the flow generator device (6) being integral with the main portion (6a') of the same flow generator device (6), from the side of the blowing opening (10) of the portable blower (1).

In an 18th aspect in accordance with the preceding aspect, the reduction of at least one orthogonal dimension, optionally a diameter, of the frustoconical end portion (6a") of the outer cap (6a) of the flow generator device (6) is less than the reduction of at least one orthogonal dimension, optionally a diameter, of the main portion (6a') of the outer cap (6a) of the flow generator device (6), optionally the inclination of the frustoconical end portion (6a") of the outer cap (6a) of the flow generator device (6) with respect to the axis (X) is less than the inclination of the main portion (6a') of the outer cap (6a) of the flow generator device (6) with respect to the axis (X).

In a 19th aspect in accordance with any one of the three preceding aspects, the outer cap (6a) of the flow generator device (6) has an initial portion (6a‴), integral with the main portion (6a') upstream thereof in the advancement direction of the air in transit towards the blowing opening (10) of the portable blower (1), the initial portion (6a‴) being substantially cylindrical or frustoconical with a reduction of at least one orthogonal dimension with respect to the longitudinal extension axis (X) of the structure (2) and or of the conduit (3) of the portable blower (1), optionally a diameter, approaching the main portion (6a').

In a 20th aspect in accordance with any one of the four preceding aspects, when dependent on any one of the aspects from the 11th to the 14th, the annular shapes of the section of the passage channel (7) of the flow generator device (6) are defined at the main frustoconical portion (6a') of the outer cap (6a) of the flow generator device (6).

In a 21st aspect in accordance with any one of the five preceding aspects, each of the annular shapes of the section of the passage channel (7) being delimited by an outer edge, optionally substantially circumferential, and an inner edge, optionally substantially circumferential, the outer edge of the annular shapes of the section of the passage channel (7) of the flow generator device (6) being defined by an inner profile (8) of the main portion (6a') of the outer cap (6a) of the flow generator device (6).

In a 22nd aspect in accordance with the 15th aspect or any one of the aspects from the 16th to the 21st when dependent on the 15th aspect, the inner structure (6b) of the flow generator device (6) has, in the advancement direction of the air in transit towards the blowing opening (10) of the portable blower (1), at least one portion having at least one orthogonal dimension with respect to the longitudinal extension axis (X) of the flow generator device (6), optionally a diameter, which is reduced.

In a 23rd aspect in accordance with the 15th aspect or any one of the aspects from the 16th to the 22nd when dependent on the 15th aspect, the inner structure (6b) of the flow generator device (6) has, in the advancement direction of the air in transit towards the blowing opening (10) of the portable blower (1), an initial portion (6b') of substantially cylindrical or frustoconical shape with a reduction in section towards the blowing opening (10) and an end portion (6b"), integral with the initial portion (6b'), downstream of the latter, having at least one dimension orthogonal to the axis (X), optionally a diameter, which is reduced towards the blowing opening (10).

In a 24th aspect in accordance with the preceding aspect, the end portion (6b") of the inner structure (6b) of the flow generator device (6) has a slender and/or tapered shape.

In a 25th aspect in accordance with any one of the two preceding aspects, the end portion (6b") of the inner structure (6b) of the flow generator device (6) has a substantially ogive shape.

In a 26th aspect in accordance with any one of the three preceding aspects, the end portion (6b") of the inner structure (6b) of the flow generator device (6) has a substantially pointed shape.

In a 27th aspect in accordance with any one of the four preceding aspects when dependent on any one of the aspects from the 11th to the 14th, the annular shapes of the section of the passage channel (7) of the flow generator device (6) are defined at the inner structure (6b) of the flow generator device (6).

In a 28th aspect in accordance with any one of the five preceding aspects, each of the annular shapes of the section of the passage channel (7) being delimited by an outer edge, optionally substantially circumferential, and an inner edge, optionally substantially circumferential, the inner edge of the annular shapes of the section of the passage channel (7) of the flow generator device (6) being defined by an outer profile (9) of the inner structure (6b) of the flow generator device (6).

In a 29th aspect in accordance with any one of the preceding aspects, a protection grille (11) arranged along the conduit (3) of the structure (2) of the portable blower (1) is provided between the flow generator device (6) and the blowing opening (10).

In a 30th aspect in accordance with the preceding aspect, the protection grille (11) is located in the passage channel (7) of the flow generator device (6).

In a 31st aspect in accordance with any one of the two preceding aspects when the 29th aspect depends on the 17th aspect or any one of the aspects from the 18th to the 28th when dependent on the 17th aspect, the protection grille (11) is located in the passage channel (7) of the flow generator device (6) at or downstream of the frustoconical end portion (6a") of the outer cap (6a) of the latter, in the advancement direction of the air in transit towards the blowing opening (10) of the portable blower (1).

In a 32nd aspect in accordance with any one of the 29th or 30th aspects when the 29th aspect depends on the 23rd aspect or any one of the aspects from the 24th to the 28th when dependent on the 23rd aspect, the protection grille (11) is located downstream of the end portion (6b") of the inner structure (6b) of the flow generator device (6), in the advancement direction of the air in transit towards the blowing opening (10) of the portable blower (1).

In a 33rd aspect in accordance with any one of the preceding aspects, the protection grille (11) has a substantially reticular structure (12) in which one or more elements (12a, 12b) of the reticular structure (12), optionally all the elements (12a, 12b) of the reticular structure (12) have an aerodynamic profile, in particular a wing profile.

In a 34th aspect in accordance with the preceding aspect, the one or more elements (12a, 12b) of the reticular structure (12) of the protection grille (11) comprise:
- a first series of a plurality of elements (12a) arranged according to a first trend, in particular the first trend being an annular trend;
- a second series of a plurality of elements (12b) arranged in accordance with a second trend, in particular the second trend being a radial trend.

In a 35th aspect in accordance with any one of the two preceding aspects, the reticular structure (12) of the protection grille (11) comprises:
- two or more annular elements (12a), optionally the annular elements (12a) of the reticular structure (12) of the protection grille (11) extend concentrically and/or coaxially to each other, in particular concentrically and/or coaxially to the passage channel (7) of the flow generator device (6);
- a plurality of radial elements (12b) intersecting the annular elements (12a).

In a 36th aspect in accordance with any one of the three preceding aspects, each radial element (12b) of the reticular structure (12) of the protection grille (11) has:
- a first portion (12c) extending substantially perpendicularly to at least one annular element (12a) of the same reticular structure (12), optionally to the outermost annular element (12a) of the reticular structure (12), in particular to the annular element (12a) of the reticular structure (12) closest to the inner profile of the passage channel (7) of the flow generator device (6);
- a second portion (12d) extending at least in part according to an inclined orientation with respect to at least one annular element (12a) of the reticular structure (12), optionally to the annular element (12a) of the innermost reticular structure (12), in particular to the annular element (12a) of the reticular structure (12) farthest from the inner profile of the passage channel (7) of the flow generator device (6).

In a 37th aspect in accordance with the preceding aspect, the second portion (12d) of each radial element (12b) of the reticular structure (12) of the protection grille (11) extends at least in part according to a curved or inclined trend with respect to the annular element (12a) of the innermost reticular structure (12) of the protection grille (11), i.e., the annular element (12a) of the reticular structure (12) farthest from the inner profile of the passage channel (7) of the flow generator device (6), so as to define with such an annular element (12a) a pair of different angles which are opposite by a 90° angle, optionally one acute and one obtuse, the second portion (12d) of each radial element (12b) of the reticular structure (12) of the protection grille (11) extending at least in part according to a substantially orthogonal trend with respect to the annular element (12a) of the outermost reticular structure (12) of the protection grille (11), i.e., the annular element (12a) of the reticular structure (12) closest to the inner profile of the passage channel (7) of the flow generator device (6), so as to define with such an annular element (12a) a pair of opposite angles each of amplitude substantially equal to about 90°.

In a 38th aspect in accordance with any one of the preceding aspects, the flow generator device (6) comprises:
- an axial rotor (13) provided with a central portion (13a) and a plurality of peripheral blades (13b) circumferentially distributed around the central portion (13a), the axial rotor (13) being drivable in rotation about a corresponding rotation axis, in particular coinciding with the longitudinal extension axis (X) of the flow generator device (6), to produce an air flow along the conduit (3) of the structure (2) of the portable blower (1) and through the passage channel (7), towards the blowing opening (10) of the latter;
- an axial straightening stator (14) arranged between the axial rotor (13) and the passage channel (7) for straightening the air flow generated by the axial rotor (13), the axial straightening stator (14) comprising a central portion (14a) and a plurality of peripheral straightening blades (14b) circumferentially distributed around the central portion (14a).

In a 39th aspect in accordance with the preceding aspect when dependent on the 15th aspect or any one of the aspects from the 16th to the 37th when dependent on the 15th aspect, the central portion (14a) of the axial straightening stator (14) is integrally joined, on the side opposite the blowing opening (10) of the portable blower (1), to the inner structure (6b) of the flow generator device (6), whereby the peripheral straightening blades (14b) of the axial straightening stator (14) convey the air flow produced by the axial rotor (13) towards the passage channel (7) of the flow generator device (6).

In a 40th aspect in accordance with any one of the two preceding aspects, the peripheral straightening blades (14b) of the axial straightening stator (14) are arranged upstream of the passage channel (7) of the flow generator device (6), in the advancement direction of the air in transit towards the blowing opening (10) of the portable blower (1).

In a 41st aspect in accordance with the preceding aspect when the 38th aspect depends on the 19th aspect or any one of the aspects from the 20th to the 37th when dependent on the 19th aspect, the peripheral straightening blades (14b) of the axial straightening stator (14) are arranged at or upstream of the initial portion (6a‴) of the outer cap (6a) of the flow generator (6).

In a 42nd aspect in accordance with any one of the two preceding aspects when the 38th aspect depends on the 23rd aspect or any one of the aspects from the 24th to the 37th when dependent on the 23rd aspect, the peripheral straightening blades (14b) of the axial straightening stator (14) are arranged at or upstream of the initial portion (6b') of the inner structure (6b) of the flow generator (6).

In a 43rd aspect in accordance with any one of the preceding aspects, the portable blower (1) comprises at least one handle portion (2a) arranged on the structure (2) for manual engagement by a user.

In a 44th aspect in accordance with the preceding aspect, the handle portion (2a) is made at or near the suction zone (4).

In a 45th aspect in accordance with any one of the two preceding aspects, the handle portion (2a) is provided with a drive control (2b), optionally a double drive control for safely starting the flow generator device (6) by the user using both hands.

In a 46th aspect in accordance with any one of the three preceding aspects, the handle portion (2a) is provided with a control command (2c) of the intensity of the air flow produced by the air flow generator device (6), the control device (2c) allowing the adjustment of the number of revolutions of the axial rotor (13) of the flow generator device (6).

In a 47th aspect in accordance with any one of the preceding aspects, the portable blower (1) has an electrical power supply.

In a 48th aspect in accordance with the preceding aspect, the flow generator device (6) is electrically powered by means of at least one battery, in particular rechargeable, optionally the at least one battery being housable in a seat (2d) provided with corresponding contacts and/or electrical conductors made and/or obtained in a rear appendage (2e) of the structure (2) of the portable blower (1).

Further features and advantages will become more apparent from the detailed description of a preferred, but not exclusive, embodiment of a portable blower in accordance with the above-listed aspects, the following claims and the attached figures.

### Brief description and drawings

A detailed description of one or more preferred embodiments of the invention is given below by way of non-limiting example, in which:
- figure 1 is a perspective view of a portable blower of the type usable in outdoor areas, such as roads, gardens, parks and/or the like, for blowing and pushing leaves, small debris, garbage and the like, in accordance with the present invention;
- figure 2 is a longitudinal section of the portable blower of figure 1;
- figure 3 is an enlarged view of a longitudinal section of a flow generator device of the portable blower illustrated in figure 2;
- figure 4 is an outer perspective view of the flow generator visible in figures 2 and 3;
- figure 5 is a schematic exploded perspective view of a sectional fragmentation of the flow generator visible in figures 2 to 4, made along the section planes I, II, III, IV and V of figure 3.

### Detailed description

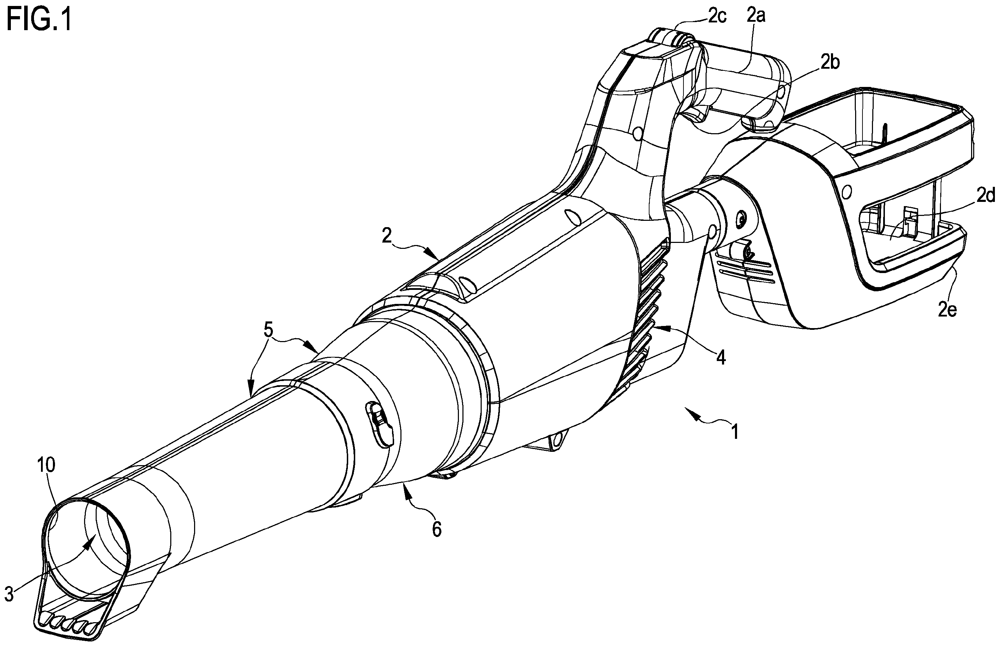

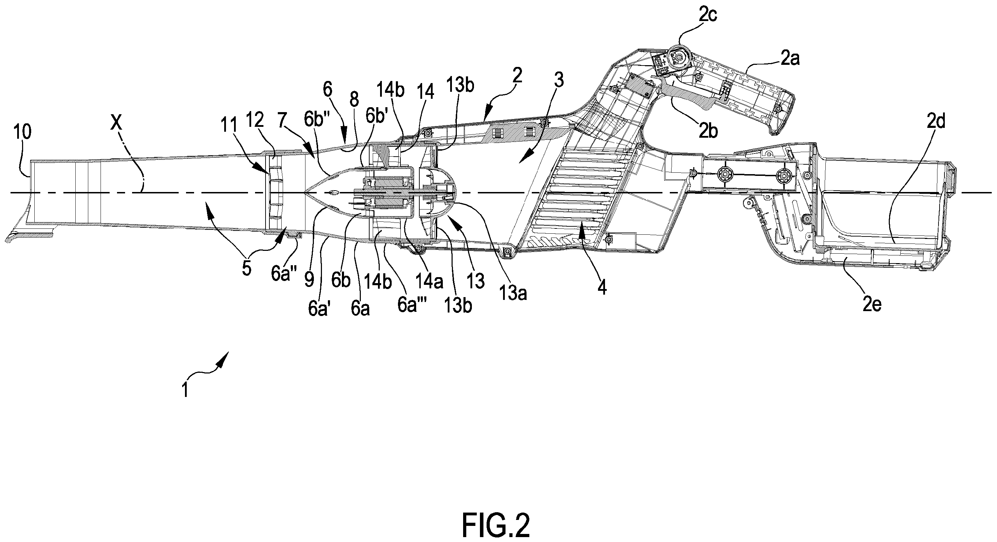

With reference to figures 1 and 2, a portable blower 1 is illustrated which is intended for maintenance operations, and/or cleaning outdoor areas, such as roads, gardens, parks and/or the like. In particular, the portable blower 1 is used for the removal, by means of air blowing, of leaves, small debris, garbage and any other small body, object or item, present and bulky on the ground, soil or road to be cleaned.

The portable blower 1 comprises a structure 2, at least partially hollow, defining at least one conduit 3 intended for the transit of an air flow between a suction zone 4 and a blowing end 5.

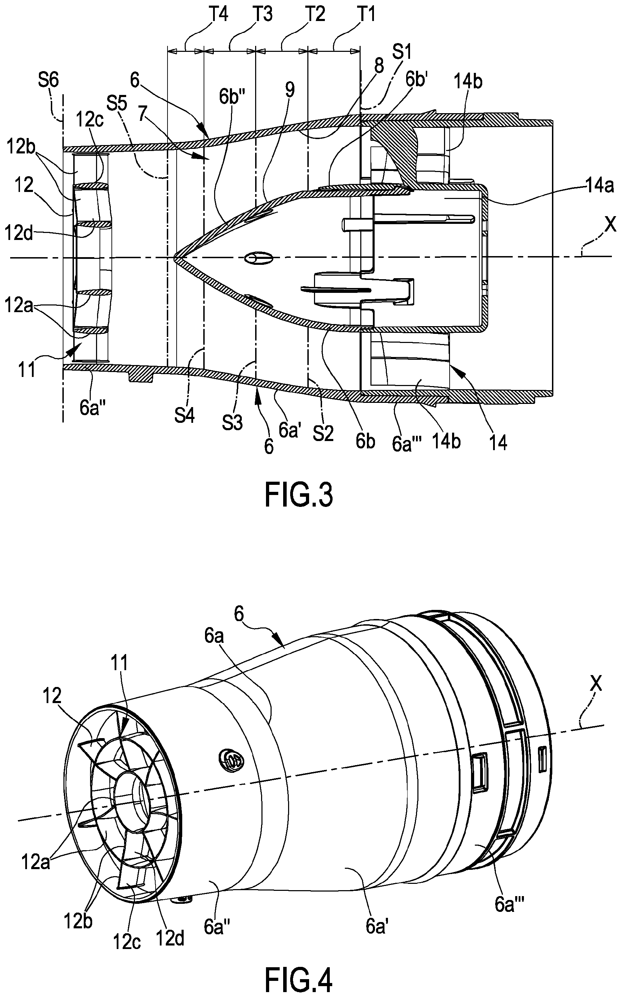

The portable blower 1 further comprises a flow generator device 6 (visible internally in figures 2, 3 and 5, and externally in figure 4) which operatively resides inside the structure 2 to operate at the conduit 3 of the latter. The flow generator device 6 is switchable between a non-operating condition, in which no air flow is generated along the conduit 3 of the structure 2 and an operating condition, in which at least one air flow is generated along the conduit 3 between the suction zone 4 and the blowing end 5, to exit through a corresponding blowing opening 10.

As visible in figure 2, the flow generator device 6 comprises at least one axial rotor 13 operatively arranged inside the conduit 3 of the structure 2 and arranged to rotate about a rotation axis, which in the embodiment solution illustrated in the attached figures coincides with a longitudinal extension axis X of the flow generator device 6, as well as with a longitudinal extension axis of the structure 2 and/or of the conduit 3 of the portable blower 1. The axial rotor 13 is provided with a central portion 13a and a plurality of peripheral blades 13b circumferentially distributed around the central portion 13a. When the flow generator device 6 is switched in the operating condition, the axial rotor 13 is driven in rotation about the corresponding rotation axis Y to generate an air flow along the conduit 3 of the structure 2 of the portable blower 1, towards the blowing opening 10.

The flow generator device 6 further comprises an axial straightening stator 14 operatively arranged inside the conduit 3 of the structure 2 between the axial rotor 13 and the blowing opening 10 of the portable blower 1 to straighten the air flow generated by the axial rotor 13 when the flow generator device 6 is in the operating condition. The axial straightening stator 14 comprises a central portion 14a and a plurality of peripheral straightening blades 14b circumferentially distributed around the central portion 14a..

With particular reference to figures 2 and 3, the flow generator device 6 defines, downstream of the axial rotor 13 and the axial straightening stator 14, a respective passage channel 7 for the air in transit towards the blowing opening 10 of the portable blower 1, which extends along the axis X and is defined between two sections S1, S6 (figure 3), an inlet section S1 and an outlet section S6.

The passage channel 7 has, orthogonally to the axis X and in the advancement direction of the air in transit towards the blowing opening 10 of the portable blower 1 between the inlet section and the outlet section, i.e., from right to left in figures 2 and 3, a passage section for the flow, which varies on the surface, reducing along at least one stretch of the passage channel 7.

The stretch of the passage channel 7 which has a reduction in passage surface from section to section can vary from one embodiment solution to another, according to needs and requirements. In some cases, it is possible to have a stretch of the passage channel 7 with a reduction in passage surface and therefore in section, which covers at least 20% of the total length of the passage channel 7 itself. In other cases, it can be envisaged that the stretch of the passage channel 7 with a reduction in passage surface extends for at least 30% of the total length of the passage channel 7. In still other cases, the stretch of the passage channel 7 which has a reduction in passage surface can also cover 50% of the length of the passage channel 7.

In accordance with the embodiment solution illustrated in figures 2 and 3, the stretch of the passage channel 7 which has a reduction in passage surface, from section to section, extends for almost the entire length of the passage channel 7, if not even along the entire longitudinal extension of the passage channel 7, i.e., to substantially cover 100% of the length of the latter.

Always with reference to the attached figures 2 and 3 and, in particular to the section of figure 3, the inlet section S1 has a maximum passage surface for the air flow in the passage channel 7, for example of about 5631 mm², and the outlet section S6 has a minimum passage surface for the air flow in the passage channel 7, for example less than or substantially equal to 5511 mm². Therefore, considering the advancement direction of the air in transit towards the blowing opening 10 of the portable blower 1, the passage channel 7 of the flow generator device 6 has, in section orthogonal to the axis X, a passage section for the flow which is reduced in surface towards the outlet section S6.

In accordance with the embodiment solution illustrated in figure 3, the reduction in surface of the passage section for the air flow in transit towards the blowing opening 10 of the portable blower 1 is continuous from the inlet section S1 to the outlet section S6.

In accordance with the embodiment solution illustrated in figures 2 and 3, the reduction of the passage section of the passage channel (7) of the flow generator device (6) in the advancement direction of the air in transit towards the blowing opening (10) of the portable blower (1), has a reduction of the surface according to a variable trend along the axis (X). In other words, the reduction in surface of the passage section of the passage channel (7) is not a linear type reduction.

It is also possible to envisage that the reduction in surface of the passage section from the inlet section S1 to the outlet section S6 has a discontinuous trend in which stretches of passage channel 7 are alternated which have a reduction in surface towards the blowing opening 10 of the portable blower 1 with stretches of passage channel 7 with a constant section.

As visible in figures 2 and 3, the passage channel 7 of the flow generator device 6 does not have, along the advancement direction of the air in transit, i.e., towards the blowing opening 10 of the portable blower 1, any stretch or segment or piece of channel having an increase in surface. On the contrary, in order to obtain an optimal stabilization of the blowing and output air flow of the blowing opening 10 of the portable blower 1, the air flow in transit must travel through a passage channel 7 which must have one or more reductions in the passage section.

Considering the advancement direction of the air in transit towards the blowing opening 10 of the portable blower 1, each passage section or section of the passage channel 7 of the flow generator device 6 is followed by a passage section or subsequent section having a smaller or equal surface and is preceded by a passage section or section having a greater or equal surface.

Taking the example of figure 2 as a reference, and leaving aside the inlet section S1 and the outlet section S6 corresponding to particular sections of the passage channel 7 of the flow generator device 6, the passage channel 7 has been sectioned at four other intermediate points with respect to the inlet section S1 and the outlet section S6, identifiable with the section planes S2, S3, S4 and S5. Moving from the inlet section S1 of the passage channel 7, which as already mentioned above, has a surface substantially equal to 5631 mm², towards the outlet section S6, it is possible to identify a second section S2 having a smaller surface with respect to the surface of the inlet section S1, i.e., by about 5614 mm², a third section S3 having a smaller surface with respect to the second surface S2, i.e., by about 5605 mm², a fourth section S4 having a smaller surface with respect to the third surface S3, i.e., by about 5540 mm², and a fifth section S5 having a smaller surface with respect to the fourth surface S4, i.e., by about 5511 mm². The outlet surface S6 can be less than or substantially equal to the surface of the fifth section S5.

In accordance with the embodiment solution illustrated in figure 3, it can be perceived that the outlet section S6 of the passage channel 7 has a smaller surface than the surface of the fifth section S5 thereof.

Similarly to what was described above, the reduction of the passage section of the passage channel 7 of the flow generator device 6 in the advancement direction of the air in transit towards the blowing opening 10 of the portable blower 1, has a reduction of the section surface, comprised between 80 mm² and 160 mm², optionally comprised between 100 mm² and 140 mm², in particular substantially equal to 120 mm².

This means that the reduction of the passage section of the passage channel 7 of the flow generator device 6 has a reduction of the surface, in percentage value, comprised between 1% and 3% of the maximum passage section, optionally comprised between 1.5% and 2.5%, in particular comprised between 2% and 2.2%.

In even further detail, the inlet section S1 and the intermediate sections S2, S3, S4 and S5, identified in figure 2, define respective stretches T1, T2, T3, T4, consecutive and contiguous, of the passage channel 7, each of which provides a relative reduction of the passage surface. With the exception of the fifth section S5 which was obtained at a distance of about 14 mm from the fourth section S4, so that the fourth stretch T4 has, along the axis X, a longitudinal extension of 14 mm, the second and third sections S2, S3 are each separated from the previous section and/or from the next section, by a measurement of about 20 mm.

A first stretch T1, delimited between the inlet section S1 and the second section S2, defines a first reduction of the passage surface of the flow of the passage channel, which is equivalent to approximately 17 mm². A second stretch T2, subsequent and contiguous to the first stretch T1, is delimited between the second section S2 and the third section S3 and defines a second reduction of the passage surface, which is equivalent to about 9 mm², whereby the first reduction in section is greater than the second reduction in section. A third stretch T3, subsequent and contiguous to the second stretch T2, is delimited between the third section S3 and the fourth section S4 and defines a third reduction of the passage surface, which is equivalent to about 65 mm², whereby the third reduction in section is greater than the first reduction in section and the second reduction in section. A fourth stretch T4, subsequent and contiguous to the third stretch T3, is delimited between the fourth section S4 and the fifth section S5 and defines a fourth reduction of the passage surface, which is equivalent to approximately 29 mm², whereby the fourth reduction in section is greater than the first and the second reduction in section, but less than the third reduction in section.

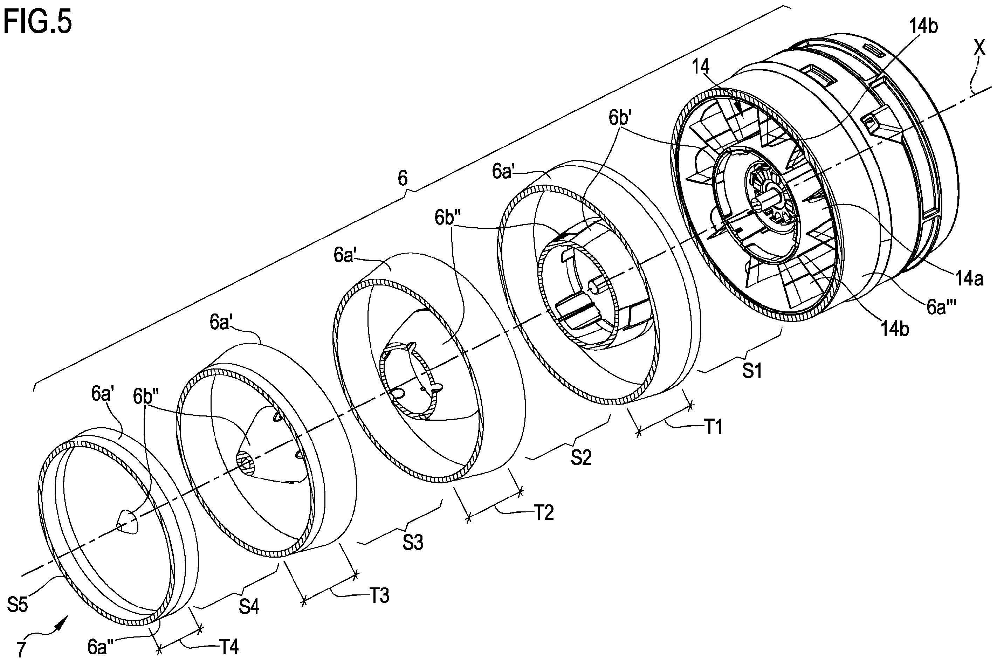

In accordance with the exploded fragmentation along the longitudinal axis X of the flow generator device 6 depicted in figure 5, it is possible to see four blocks of the flow generator device 6 corresponding to the stretches T1, T2, T3, T4, described above and highlighted in figure 3, related to the different reductions of the flow passage surface of the passage channel 7.

In accordance with the embodiment solution illustrated in figures 2, 3 and 5, the shape of the section of the passage channel 7 of the flow generator device 6 varies, towards the blowing opening 10 of the portable blower 1, from a substantially annular shape to a substantially circular shape. In particular, the shape variation occurs by progressively passing from a series of substantially annular shape sections to a series of substantially circular shape sections.

Each of the annular shapes of the section of the passage channel 7 is delimited by an outer edge, optionally substantially circumferential, and an inner edge, optionally substantially circumferential, which can be subject to dimensional variations along the axis X. At least one between the inner edge and the outer edge, of the annular shapes defining a part of the passage channel 7 of the flow generator device 6, has a reduction of at least one dimension orthogonal to the axis X, optionally a reduction of the diameter.

As visible in figures 2, 3 and 5, the passage channel 7 is defined between an outer cap 6a and an inner structure 6b of the flow generator device 6.

The outer cap 6a has a substantially central main portion 6a', an end portion 6a" integral with the main portion 6a' on the side of the blowing opening 6 and an initial portion 6a‴ integral with the main portion 6a' upstream thereof in the advancement direction of the air in transit towards the blowing opening 10 of the portable blower 1.

The main portion 6a' has a substantially frustoconical shape with a reduction of at least one orthogonal dimension with respect to the axis X, in particular the diameter, the end portion 6a" has a substantially cylindrical or frustoconical shape with a reduction of at least one orthogonal dimension with respect to the axis X, optionally the diameter, and the initial portion 6a‴ has a substantially cylindrical or frustoconical shape with a reduction of at least one orthogonal dimension with respect to the axis X, optionally the diameter. The reduction in diameter of the end portion 6a" is smaller than the reduction in diameter of the main portion 6a'. The inclination of the frustoconical end portion 6a" of the outer cap 6a of the flow generator device 6 with respect to the axis X is also lower than the inclination of the main portion 6a'.

As visible in figures 2 and 3, the inner structure 6b of the flow generator device 6 has, towards the blowing opening 10 of the portable blower 1, an initial portion 6b' of substantially cylindrical or frustoconical shape with a reduction in section towards the blowing opening 10 and an end portion 6b", integral with the initial portion 6b', downstream of the latter, having at least one dimension orthogonal to the axis X, optionally the diameter, which is reduced towards the blowing opening 10. The end portion 6b') of the inner structure 6b of the flow generator device 6 has a slender and/or tapered shape, optionally substantially ogive, in particular substantially pointed.

The annular shapes of the section of the passage channel 7 of the flow generator device 6 are defined at the frustoconical main portion 6a' of the outer cap 6a of the flow generator device 6 and at the inner structure 6b of the flow generator device 6.

Each of the annular shapes of the section of the passage channel 7 is defined by an outer edge and a substantially circumferential inner edge. The outer edge is defined by an inner profile 8 of the main portion 6a' of the outer cap 6a of the flow generator device 6, while the inner edge is defined by an outer profile 9 of the inner structure 6b of the flow generator device 6.

The inner structure 6b is solidly joined or removably engaged to the inner portion 14a of the axial straightening stator 14 of the flow generator 6, on the side opposite the blowing opening 10 of the portable blower 1 so that the peripheral straightening blades 14b convey the air flow produced by the axial rotator 13 towards the passage channel 7.

As visible in figures 2 to 4, a protection grille 11 is also provided which is located in the passage channel 7 of the flow generator device 6 at or downstream of the frustoconical end portion 6a" of the outer cap 6a of the latter, towards the blowing opening 10 of the portable blower 1, and downstream of the end portion 6b" of the inner structure 6b of the flow generator device 6.

The protection grille 11 has a substantially reticular structure 12 and all the elements 12a, 12b which compose it each have an aerodynamic profile, in particular a wing profile.

Among the elements 12a, 12b composing the reticular structure 12 of the protection grille 11, a first series of a plurality of elements 12a arranged according to an annular trend and a second series of a plurality of elements 12b arranged in accordance with a second radial trend are identifiable.

In detail, the reticular structure 12 of the protection grille 11 comprises two or more annular elements 12a which are concentric and/or coaxial with each other and with respect to the passage channel 7 of the flow generator device 6 and, a plurality of radial elements 12b intersecting the annular elements 12a.

Each radial element 12b has a first portion 12c extending substantially perpendicularly to the outermost annular element 12a of the reticular structure 12, i.e., to the annular element 12a closest to the inner profile 8 of the passage channel 7 and a second portion 12d extending at least in part according to an inclined orientation with respect to the annular element 12a of the innermost reticular structure 12, i.e., to the annular element 12a farthest from the inner profile 8 of the passage channel 7.

In even further detail, the second portion 12d of each radial element 12b extends at least in part according to a curved or inclined trend with respect to the innermost annular element 12a, i.e., to the annular element 12a farthest from the inner profile 8 of the passage channel 7, so as to define with said annular element 12a a pair of different angles which are each opposite by a 90° angle, optionally one acute and one obtuse. The second portion 12d of each radial element 12b also extends according to a substantially orthogonal trend with respect to the outermost annular element 12a, i.e., to the annular element 12a closest to the inner profile 8 of the passage channel 7, so as to define with said annular element 12a a pair of opposite angles each of amplitude substantially equal to about 90°.

### Advantages

The present invention allows to solve the problems found in the prior art and to obtain the following advantages.

Firstly, it should be noted that the particular configuration of the passage channel of the flow generator device of the portable blower in accordance with the present invention allows to produce a blowing and output air flow, extremely efficient and of high quality, where quality is intended as a high degree of homogeneity and linearity of the flow produced.

The considerable increase in the quality and efficiency of the flow is obtained by means of an efficient stabilization of the flow along the passage channel of the flow generator device which, through the reduction or reductions of sections envisaged towards the blowing opening, accelerates the advancing air flow, giving it a high stability, homogeneity and linearity.

The configuration of the passage channel also makes it possible to eliminate or in any case significantly reduce the undesired phenomenon of the formation of turbulence or recirculation, which tend to significantly compromise the stability of the flow in output.

## Claims

1. Portable blower (1) comprising:
- a structure (2), at least partially hollow, defining at least one conduit (3) for the transit of an air flow between a suction zone (4) and a blowing end (5), at which a blowing opening (10) of the portable blower (1) is defined;
- a flow generator device (6) operatively arranged inside the structure (2) switchable between a non-operating condition, in which no air flow is generated along the conduit (3) of the structure (2) and an operating condition, in which an air flow is generated along the conduit (3) of the structure (2) between the suction zone (4) and the blowing opening (10), wherein the flow generator device (6) defines a respective passage channel (7) for the air in transit extending along a longitudinal extension axis (X) of the flow generator device (6), optionally coinciding with a longitudinal axis of the structure (2) and/or of the conduit (3) of the portable blower (1), and is defined between an inlet section and an outlet section, the passage channel (7) having in section orthogonal to the axis (X) and in the advancement direction of the air in transit towards the blowing opening (10) of the portable blower (1) between the inlet section and the outlet section, a passage section for the flow, variable in surface, which is reduced along at least one stretch of the passage channel (7).

2. Portable blower (1) according to the preceding claim, wherein said at least one stretch of the passage channel (7) covers at least 20% of a length of the passage channel (7), in particular at least 30% and even more in particular at least 50%, optionally the entire length of the passage channel (7).

3. Portable blower (1) according to any one of the preceding claims, wherein the passage channel (7) of the flow generator device (6) has, in section orthogonal to the axis (X) and in the advancement direction of the air in transit towards the blowing opening (10) of the portable blower (1), a passage section for the air flow, variable in surface, which is reduced, or remains constant, along the passage channel (7), in particular the passage section for the flow, variable in surface, not having any increase in surface.

4. Portable blower (1) according to any one of the preceding claims, wherein the passage channel (7) of the flow generator device (6) has, in section orthogonal to the axis (X) and in the advancement direction of the air in transit towards the blowing opening (10) of the portable blower (1), a passage section for the flow, variable in surface, which has a continuous reduction of the passage section.

5. Portable blower (1) according to any one of the preceding claims, wherein the passage channel (7) of the flow generator device (6) has at least one stretch of channel with a constant section, in which the passage section remains the same for the entire length of the stretch of channel with a constant section.

6. Portable blower (1) according to any one of the preceding claims, wherein in the advancement direction of the air in transit towards the blowing opening (10) of the portable blower (1), each passage section or section of the passage channel (7) of the flow generator device (6) is followed by a passage section or subsequent section having a smaller or equal surface.

7. Portable blower (1) according to any one of the preceding claims, wherein in the advancement direction of the air in transit towards the blowing opening (10) of the portable blower (1), each passage section or section of the passage channel (7) is preceded by a passage section or section having a greater or equal surface.

8. Portable blower (1) according to any one of the preceding claims, wherein the reduction of the passage section of the passage channel (7) of the flow generator device (6) in the advancement direction of the air in transit towards the blowing opening (10) of the portable blower (1), has a reduction of the section surface comprised between 80 mm² and 160 mm², optionally comprised between 100 mm² and 140 mm², in particular equal to 120 mm².

9. Portable blower (1) according to any one of the preceding claims, wherein the reduction of the passage section of the passage channel (7) of the flow generator device (6) in the advancement direction of the air in transit towards the blowing opening (10) of the portable blower (1), has a reduction of the surface in percentage value comprised between 1% and 3% of the maximum passage section, optionally comprised between 1.5% and 2.5%, in particular comprised between 2% and 2.2%.

10. Portable blower (1) according to any one of the preceding claims, wherein in the advancement direction of the air in transit towards the blowing opening (10) of the portable blower (1), the shape of the section of the passage channel (7) of the flow generator device (6) varies in shape, optionally the shape of the section of the passage channel (7) of the flow generator device (6) varying from a substantially annular shape to a substantially circular shape, in particular the shape of the section of the passage channel (7) of the flow generator device (6) varying according to a series of sections substantially annular in shape to a series of sections of substantially circular shape.

11. Portable blower (1) according to any one of the preceding claims, in the advancement direction of the air in transit towards the blowing opening (10) of the portable blower (1), a part of the section of the passage channel (7) of the flow generator device (6) is defined by a plurality of annular shapes aligned along the longitudinal extension axis (X) of the structure (2) and/or of the conduit (3) of the portable blower (1), each of the annular shapes of the section of the passage channel (7) being delimited by an outer edge, optionally substantially circumferential, and an inner edge, optionally substantially circumferential, optionally at least one among the inner edge and the outer edge, of the annular shapes defining a part of the passage channel (7) of the flow generator device (6), having a reduction of at least one dimension orthogonal to the longitudinal extension axis (X) of the flow generator device (6), optionally a reduction of a diameter.

12. Portable blower (1) according to any one of the preceding claims, wherein the passage channel (7) of the flow generator device (6) is at least in part defined between an outer cap (6a) and an inner structure (6b) of the flow generator device (6).

13. Portable blower (1) according to the preceding claim, wherein the outer cap (6a) of the flow generator device (6) has:
- a main portion (6a'), substantially central, of at least partially frustoconical shape with a reduction of at least one orthogonal dimension with respect to the longitudinal extension axis (X) of the flow generator device (6), optionally one diameter, in the advancement direction of the air in transit towards the blowing opening (10) of the portable blower (1);
- an end portion (6a") of substantially cylindrical or frustoconical shape with a reduction of at least one transverse dimension with respect to the longitudinal extension axis (X) of the flow generator device (6), optionally a diameter, in the advancement direction of the air in transit towards the blowing opening (10) of the portable blower (1), the end portion (6a") of the outer cap (6a) of the flow generator device (6) being integral with the main portion (6a') of the same flow generator device (6),
- an initial portion (6a‴), integral with the main portion (6a') upstream thereof in the advancement direction of the air in transit towards the blowing opening (10) of the portable blower (1), the initial portion (6a‴) being substantially cylindrical or frustoconical with a reduction of at least one transverse dimension with respect to the longitudinal extension axis (X) of the flow generator device (6), optionally a diameter, approaching the main portion (6a').

14. Portable blower (1) according to any one of the two preceding claims, wherein the inner structure (6b) of the flow generator device (6) has, in the advancement direction of the air in transit towards the blowing opening (10) of the portable blower (1):
- an initial portion (6b') of substantially cylindrical or frustoconical shape with a reduction in section towards the blowing opening (10);
- an end portion (6b"), integral with the initial portion (6b') downstream of the latter, having at least one transverse dimension, optionally a diameter, which is reduced towards the blowing opening (10), optionally, the end portion (6b") of the inner structure (6b) of the flow generator device (6) having a slender and/or tapered shape, in particular substantially ogive, even more in particular substantially pointed.

15. Portable blower (1) according to claim 11 or any one of claims 12 to 14, when
claim 12 depends on claim 11, each of the annular shapes of the section of the passage channel (7) being delimited by an outer edge, optionally substantially circumferential, and an inner edge, optionally substantially circumferential, the outer edge of the annular shapes of the section of the passage channel (7) of the flow generator device (6) being defined by an inner profile (8) of the main portion (6a') of the outer cap (6a) of the flow generator device (6), while the inner edge of the annular shapes of the section of the passage channel (7) of the flow generator device (6) being defined by an outer profile (9) of the inner structure (6b) of the flow generator device (6).
